(19)

Europäisches Patentamt

European Patent Office

Office européen des brevets

(11) **EP 3 989 640 A2**

(12) **EUROPEAN PATENT APPLICATION**

(43) Date of publication:
27.04.2022 Bulletin 2022/17

(21) Application number: 21199857.0

(22) Date of filing: 29.09.2021

(51) International Patent Classification (IPC):
*H04W 36/00* *(2009.01)*

(52) Cooperative Patent Classification (CPC):
H04W 36/0083

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.10.2020 FI 20205972**

(71) Applicant: **Nokia Technologies Oy**
**02610 Espoo (FI)**

(72) Inventors:
• **KNUDSEN, Knud**
**9440 Aabybro (DK)**
• **ROM, Christian**
**9000 Aalborg (DK)**
• **LASELVA, Daniela**
**9270 Klarup (DK)**

(74) Representative: **Nokia EPO representatives**
**Nokia Technologies Oy**
**Karakaari 7**
**02610 Espoo (FI)**

(54) **METHOD AND DEVICES FOR CELL MEASUREMENT IN A CELLULAR NETWORK**

(57) A communication apparatus (101, 1500) comprising a plurality of antenna panels (1513a, 1513b, 1513c, 1513d) is described. The apparatus comprises means for determining (302) whether a chained network deployment of cells (103-108) exists along a path (102) of said apparatus; means for selecting (304), in case said determination is positive, a neighbor cell (104) expected along said path; means for selecting (305), in case said determination is positive, an antenna panel of said plurality of antenna panels as a function of an information representative of a direction of motion of said communication apparatus along said path; and means for detecting (306) said expected neighbor cell using said antenna panel.

Methods and base stations are also described.

Fig. 3

EP 3 989 640 A2

**Description**

TECHNICAL FIELD

Methods and devices for cell measurements in a cellular network are described. The context of these methods and devices can be that of a user equipment comprising a plurality of antenna panels which may be used to carry out measurements such as e.g. radio resource management (RRM) measurements.

BACKGROUND

In 5G networks, user equipment (UE) devices in Radio Resource Control (RRC) Idle / Inactive mode have to perform neighbor cell measurements for Idle / Inactive mode mobility (i.e. cell reselection). Such measurements consume UE power.

SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

One or more embodiments concern a communication apparatus comprising a plurality of antenna, comprising:

- means for determining whether a chained network deployment of cells exists along a path of said apparatus;
- means for selecting, in case said determination is positive, a neighbor cell (104) expected along said path;
- means for selecting in case said determination is positive, an antenna panel of said plurality of antenna panels as a function of an information representative of a direction of motion of said communication apparatus along said path;
- means for detecting said expected neighbor cell using said antenna panel.

According to one or more embodiments, said means for selecting an antenna panel are further configured to, if said detecting is unsuccessful, selecting another antenna panel and reiterating said detecting for said expected neighbour cell.

According to one or more embodiments of the communication apparatus, said means for selecting an antenna panel are further configured to select panels according to the following order: the panel having a highest antenna gain in the direction of motion, the panel having a highest gain in the direction opposite to the direction of motion, at least one other panel.

According to one or more embodiments, the apparatus further comprises means for, if said detection is successful, carrying out radio resource management measurements and performing a reselection of said expected neighbor cell as a function of said radio resource management measurements.

According to one or more embodiments, said means for determining whether a chained network deployment of cells exists are further configured to receive explicit information from a serving cell that it belongs to a chained network deployment.

According to one or more embodiments, said means for determining whether a chained network deployment of cells exists are further configured to determine whether past serving cells of said apparatus were aligned with said path.

According to one or more embodiments, said means for determining whether a chained network deployment of cells exists are further configured to determine that a chained network deployment exists if N consecutive past serving cells are determined as path aligned, wherein N is an integer greater than 1.

According to one or more embodiments, said means for determining whether a chained network deployment of cells exists are further configured to determine path alignment of a given cell as function of a distance of a transmission/reception point of said given cell from the path and of antenna panel beam width.

According to one or more embodiments, said means for determining whether a chained network deployment of cells exists are further configured to evaluate said distance based on radio resource management measurements carried out by said apparatus before and after passing the transmission/reception point of said given cell on said path.

According to one or more embodiments, said means for determining whether a chained network deployment of cells exists are further configured to evaluate said distance as a function of the evolution of Doppler shifts and/or the evolution of path loss.

According to one or more embodiments, said means for selecting an expected neighbor cell are further configured to receive an ordered list of neighbour cells part of said chained network deployment and selecting said expected neighbor cell in said list.

According to one or more embodiments, said means for selecting an expected neighbor cell are further configured to determine said expected neighbor cell as a function of the order of the cells in the list compared to said direction of motion.

One or more embodiments concern a base station for use in a cellular network comprising:

- means for providing serving cell coverage to a user equipment on a path;
- means for sending to said user equipment a list of a neighbor cells, wherein said neighbor cells are part of an identified chain of cells providing coverage on said path, said list being ordered as a function of successive locations of said neighbor cells along said path.

According to one or more embodiments, the base station further comprises means for transmitting to said user equipment an indication that the serving cell is part of said chain.

One or more embodiments concern method at a communication apparatus comprising a plurality of antenna panels, said method comprising:

- determining whether a chained network deployment of cells exists along a path of said apparatus;

and in case said determination is positive:

- selecting a neighbor cell expected along said path;
- selecting an antenna panel of said plurality of antenna panels as a function of an information representative of a direction of motion of said communication apparatus along said path;
- detecting said expected neighbor cell using said antenna panel.

BRIEF DESCRIPTION OF THE DRAWINGS

Example embodiments will be more fully understood from the detailed description given herein and the accompanying drawings, which are given by way of illustration only.

FIG. 1 is a schematic diagram of a network illustrating one or more exemplary embodiments.
FIG. 2 is a schematic diagram illustrating evolution of power measurements for a moving user equipment according to one or more exemplary embodiments.
FIG. 3 is a flowchart illustrating one or more exemplary embodiments of a method carried out at a user equipment.
FIG. 4 is a state transition diagram for a chained network deployment status one or more exemplary embodiments.
FIG. 5 is a schematic diagram illustrating metrics measurements according to one or more exemplary embodiments.
FIG. 6 is a schematic diagram illustrating transmission/reception point placement along a path such as road according to one or more exemplary embodiments.
FIG. 7 is a flowchart of an exemplary embodiment of a method employed by the UE to determine road alignment of a cell.
FIG. 8 is a graph showing Doppler Shift measurements in Hz for first and second use cases according to one or more exemplary embodiments.
FIG. 9 is a flowchart of an exemplary embodiment of a method that can be used by the UE to determine road alignment of a cell based on a second metric.
FIG. 10 is a diagram of a simulation of the evolution of free space path loss difference values when the UE moves towards and away from a transmission/reception point of a cell according to two use cases in the frame of one or more exemplary embodiments.
FIG. 11 is a diagram of a simulation of the evolution of free space path loss difference values when the UE moves towards and away from a transmission/reception point of a cell showing the influence of weather conditions on the path loss for one use case in the frame of one or more exemplary embodiments.
FIG. 12 is a flowchart of an exemplary embodiment of an antenna panel selection method carried out by the UE.
FIG. 13 is a schematic diagram of front and back panel radiation patterns of a UE according to one or more exemplary embodiments.
FIG. 14 is a diagram showing the evolution of an angle between a UE direction of motion and a line segment between the UE and a camping cell according to two use cases in the frame of one or more exemplary embodiments.
FIG. 15 is a schematic block diagram of a user equipment UE according to one or more exemplary embodiments.
FIG. 16 is a schematic block diagram of a base station according to one or more exemplary embodiments.
FIG. 17 is a diagram of a simulation of the evolution of free space path loss difference values with a transmission/reception point at a first distance from a road.
FIG. 18 is a diagram of a simulation of evolution of free space path loss difference values with a transmission/reception point at a second distance from a road.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

DETAILED DESCRIPTION

According some aspects, there is provided the subject matter of the independent claims. Some further aspects are defined in the dependent claims. The embodiments that do not fall under the scope of the claims are to be interpreted as examples useful for understanding the disclosure.

Various exemplary embodiments will now be described more fully with reference to the accompanying drawings. However, specific structural and functional details disclosed herein are merely representative for purposes of describing example embodiments. The exemplary embodiments may be embodied in many alternate forms and should not be construed as limited to only the embodiments set forth herein. It should be understood that there is no intent to limit example embodiments to the particular forms disclosed.

It should be appreciated by those skilled in the art that any functions, engines, block diagrams, flow diagrams, state transition diagrams and / or flowcharts herein represent conceptual views of illustrative circuitry embodying the principles described herein. Similarly, it will be appreciated that any flow charts, flow diagrams, state transition diagrams, pseudo code, and the like represent various processes which may be substantially represented in computer readable medium and so executed by a computer or processing apparatus, whether or not such computer or processor is explicitly shown.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, functional blocks denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may be any physical media that can be read, written or more generally accessed by a computer / a processing device. Examples of computer storage media include, but are not limited to, a flash drive or other flash memory devices (e.g. memory keys, memory sticks, USB key drive), CD-ROM or other optical storage, DVD, magnetic disk storage or other magnetic storage devices, solid state memory, memory chip, RAM, ROM, EEPROM, smart cards, a relational database management system, a traditional database, or any other suitable medium that can be used to carry or store program code in the form of instructions or data structures which can be read by a computer processor. Also, various forms of computer-readable medium may be used to transmit or carry instructions to a computer, including a router, gateway, server, or other transmission device, wired (coaxial cable, fiber, twisted pair, DSL cable) or wireless (infrared, radio, cellular, microwave). The instructions may include code from any computer-programming language, including, but not limited to, assembly, C, C++, Basic, SQL, MySQL, HTML, PHP, Python, Java, Javascript, etc. Embodiments of a computer-readable medium include, but are not limited to, both computer storage media and communication media including any medium that facilitates transfer of a computer program from one place to another. Specifically, program instructions or computer readable program code to perform embodiments described herein may be stored, temporarily or permanently, in whole or in part, on a non-transitory computer readable medium of a local or remote storage device including one or more storage media.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

According to example embodiments, network elements, network devices, data servers, network resource controllers, network apparatuses, clients, routers, gateways, network nodes, computers, cloud-based servers, web servers, application servers, proxies or proxy servers, or the like, may be (or include) hardware, firmware, hardware executing software or any combination thereof. Such hardware may include processing or control circuitry such as, but not limited to, one or more processors, one or more CPUs, one or more integrated circuits one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Exemplary embodiments described herein are placed in the frame of a 5G communication network. However, the Person Skilled in the Art may easily apply the teachings disclosed herein to other types of networks in which mobile user equipment with multiple antenna panels may be used.

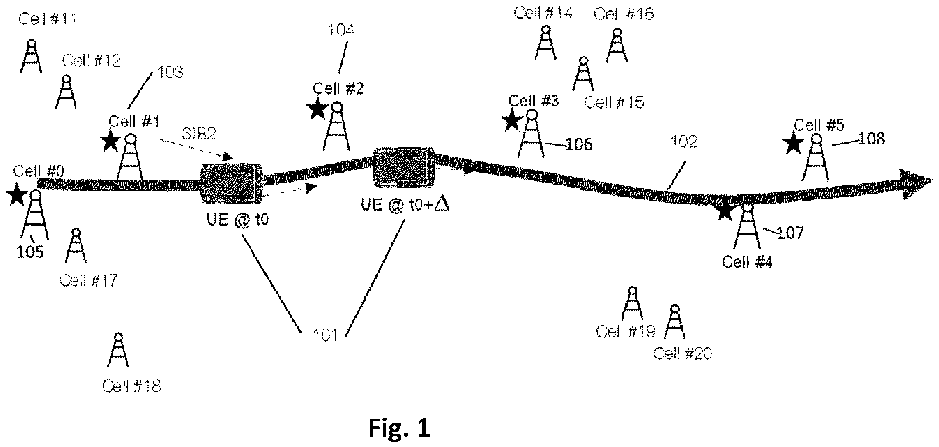

FIG. 1 is a schematic diagram of a network illustrating one or more exemplary embodiments. A user equipment (UE) 101 follows a route 102. The UE 101 is represented twice on FIG. 1, once at t=t0 and once at t=t0+$\Delta$t. The area along and around route 102 comprises base stations (which are named gNBs in the exemplary context of a 5G network) labelled according to the cells they create, i.e. 'Cell #x' in FIG. 1 in reference to the area or cell covered by each base station. A base station, as said named gNodeB in 5G and also referred to NG-RAN node, can be split logically in a gNB-Central Unit (CU) and one or more gNB-Distributed Units (DU). Each DU can control one or more cells, where each cell may be associated with one or more transmission/reception points (TRPs) and/or Radio Units (RUs). For a clear explanation, in the figures and in what follows, a base station is associated with one cell having one transmission/reception point, but the exemplary embodiments are not limited to this case, i.e. a base station may control several cells each having several transmission/reception points. For the same reason, a transmission/reception point will be described as collocated with its base station in what follows, although this is not necessarily be the case - again, none of the exemplary embodiments are limited to this case. As it moves along route 102, the UE will move from a camping cell (which may also be referred to as 'serving cell'), e.g. cell#1 of base station 103 towards a target cell, e.g. cell#2 of base station 104 and carry out a cell reselection procedure. During the reselection process, System Information Block ("SIB") messages are obtained by the UE from the cell(s) it considers to camp on.

According to one or more exemplary embodiments, Cell#0 to Cell#5 (corresponding to base stations 105, 103, 104, 106, 107 and 108 respectively) are part of a so called 'chained network deployment' linked to route 102, whereas the other cells in FIG. 1 are not part of the 'chained network deployment'. The notion of 'chained network deployment' will be described in more detail later on. According to one or more embodiments, the UE is in RRC Inactive or Idle state and operates in a frequency range called FR2 or higher, where 'RRC' stands for Radio Resource Control and FR2 includes frequency bands from 24.25 GHz to 52.6 GHz. This is to be compared to the FR1 range, which essentially covers the frequencies below 6 GHz. RRC states of NR are described in 3GPP TS 38.304, whereas user equipment behavior and actions in the RRC Inactive/Idle state 3GPP TS.

The modes and the frequency ranges are provided as exemplary details within the frame of a 5G implementation.

The UE typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a UE may also be a nearly exclusive uplink only device, of which an example is a camera or video camera loading images or video clips to a network.

A UE may be carried by or be integral part of a moving object such as an individual or a manned or unmanned vehicle or moving device (car, drone, bicycle, train, ship, autonomous vehicle...).

A UE may also be a device having capability to operate in an Internet of Things (IoT) network which is a scenario in which objects are provided with the ability to transfer data over a network without requiring human-to-human or human-to-computer interaction. In some applications, a UE may be a small portable device with radio parts (such as a watch, earphones or eyeglasses). The UE may be implemented as a single hardware device or may be implemented on separate interconnected hardware devices interconnected by one or more communication links, with wired and/or wireless segments. The UE may also be called a subscriber unit, mobile station, remote terminal, access terminal, user terminal or user device just to mention but a few names or apparatuses.

According to one or more embodiments, the UE comprises several antenna panels. The antenna panels may be positioned so as to cover different directions.

When operating in FR2, the UE is expected to consume more power for Reference Signal Received Power (RSRP) measurements, especially if the UE comprises several antenna panels, since measurements may be carried out from more than one panel. Also, measurements may be more frequent due to the short range and propagation conditions in FR2. Frequency of measurements may also be impacted by the speed of the UE; with measurements being presumably more frequent as speed increases in order to discover neighbor cells. Lastly, measurements for a given number of cells in FR2 are expected to consume more power than for the same number of cells in FR1.

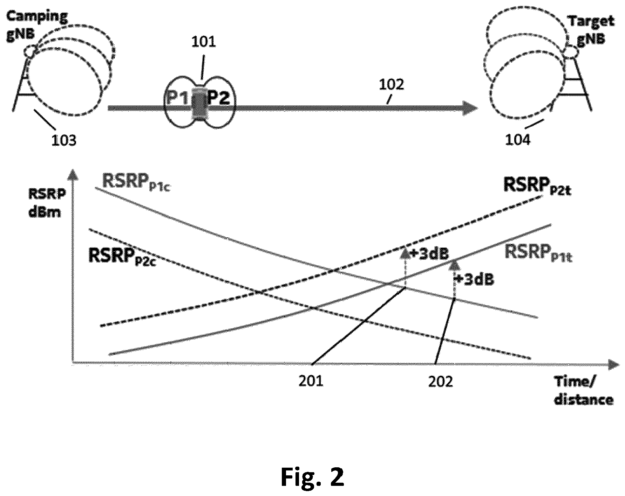

FIG. 2 illustrates a possible impact on power consumption of a UE comprising several antenna panels. In FIG 2, elements similar to those of FIG. 1 have the same numbering. The upper part of FIG. 2 is a diagram schematically illustrating the UE 101 as it moves between base stations 103 and 104 along route 102. According to one exemplary embodiment, the UE comprises two antenna panels PI and P2, oriented at 180°, with P1 being oriented substantially towards the direction into which the UE moves and P2 being oriented substantially into the opposite direction. The ellipses around the labels P1 and P2 schematically indicate the positioning of the front lobes for each antenna panel. Within the frame of the example of FIG.2, the antenna panels have a high directivity. The lower part of FIG. 2 is a graph showing what RSRP measurements may look like in principle at both these antenna panels, for each of the two base stations 103 and 103. In the graph, RSRPpnc and RSRPpnt respectively identify measurements made for the camping cell of base station 103 and the target cell of base station 104 using antenna panel Pn. It can be observed that the RSRP measurements for a same cell for each of the panels present a significant difference, due to the high directivity of the antenna panels and their high front lobe/back lobe ratio. I.e. a panel pointing away from a transmission/reception point of a cell will measure a lower received power. The point referenced 201 in FIG. 2 indicates the point at which there is a 3dB difference between RSRPp2t and RSRPplc (two panels are used, one for each cell), whereas point 202 indicates the point at which there is a 3dB difference between RSRPplc and RSRPplt (only one panel is used for measuring both cells). If both panels are used for measurement and are respectively oriented towards the transmission/reception point of the cell for which they are to provide a measurement, a 3db difference is reached earlier (at point 201) than when only one panel is used (at point 202).

So, depending on the panel scanning and panel switching algorithms applied by the UE:

- power consumed is function of the number of panels used for measuring (e.g. all panels, all the time);
- cell reselection (i.e. the change from the camping cell of base station 103 to the target cell of base station 104) may be delayed when only one panel is used;
- using an antenna panel pointing away from the transmission/reception point of a target cell may provide biased measurements and indicate a lower cell quality than the actual cell quality, which would be measured using an antenna panel pointing toward the transmission/reception point of the target cell.

According to one or more exemplary embodiments, a chained network deployment is a set of two or more cells positioned on or near a path that a mobile device is likely to take and that provide coverage to the UEs moving along this path.

Non-limiting examples of such paths comprise roads, highways or railway tracks, flight paths for manned or unmanned airborne vehicles including but not limited to drones, canals, rivers, bicycle tracks, ski slopes, hiking trails and/or walkways or any other kind of path, route, trajectory or track along which a UE may move. Paths may or may not be linear. Paths may loop (e.g. when associated with a city beltway).

According to one or more exemplary embodiments the TRPs/RUs of the cells belonging to a chained network deployment can be located on the light poles along a road or on top of the rail tracks.

Given a path, the UE is likely to connect in a sequential manner to the cells of a chained network deployed along this path.

For the FR2 frequency range, cells may be deployed in such a manner as to avoid holes in the coverage.

Particularly in the frame of use cases where the potential velocity of the UE is high, such as in the case of a highway or high speed train tracks, frequent cell reselections may occur, associated with neighbor cell measurements. It is thus desirable to select antenna panels for neighbor cell measurements intelligently to avoid unnecessarily using antenna panels and wasting power in the process.

According to one or more exemplary embodiments, a UE acquires knowledge on the deployment of base stations / cells, e.g. on whether a cell is part of a chained network deployment or not, and uses this knowledge to adapt its neighbor cell measurement strategy.

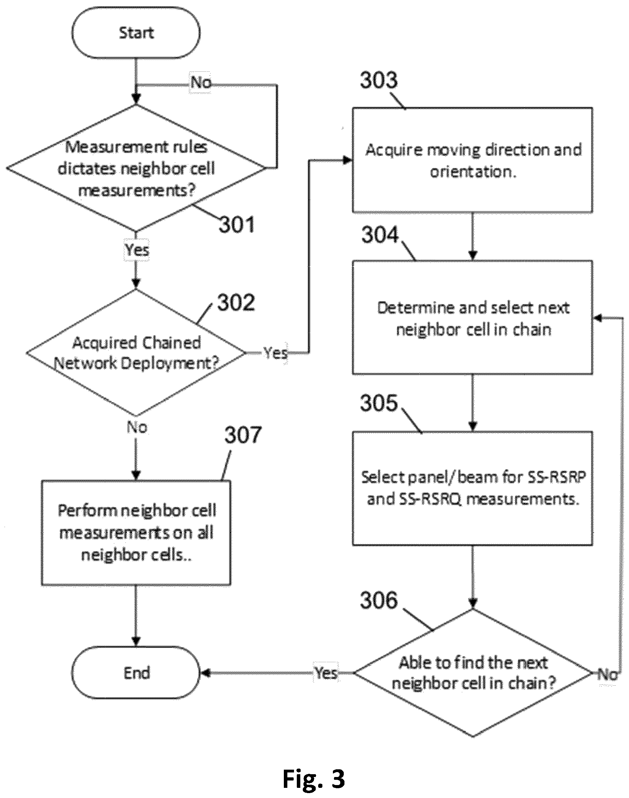

FIG. 3 is a flowchart illustrating one or more embodiments of a method implemented by the UE.

According to a first step 301, the UE determines whether neighbor cell measurements are to be performed or not. According to one exemplary embodiment, this determination may be made by carrying out power or quality measurements (such as RSRP, resp. RSRQ) for the camping cell, comparing these to a predetermined threshold and carrying out neighbor cell measurements when measurements fall below said threshold. In a 5G implementation, this threshold may be defined by the 'SIntrasearchP/Q' parameter. SIntrasearchP/Q per se is described e.g. in 3GPP TS 38.304 section 5.2.4.2. RSRP and RSPQ measurements are radio resource management (RRM) measurements, as defined in 3GPP TS 38.215 Rel. 16 Section 5.1. Other types of thresholds and/or measurements may be used.

According to a step 302, the UE determines whether the cell it is camping on belongs to a chained network deployment.

If this is the case, then the UE determines information indicative of the direction into which the UE is moving and information indicative of its orientation according to a step 303.

According to a step 304 following step 303, the UE determines a neighbor cell for measurement purposes. According to one or more embodiments, this cell is the next cell expected in a chained network deployment compared to the camping cell, taking into account the direction of motion and the orientation of the UE.

According to a step 305 following step 304, the UE selects the antenna panel pointing into the direction of motion (or the antenna panel closest to pointing into this direction) and carries out measurements for the previously identified next neighbor cell using this antenna panel.

According to a step 306, the UE searches for the identified next cell and as a result determines whether it can detect it or not. In the negative, step 304 is carried out again to determine another cell.

According to a step 307, which is arrived at from step 302 in case the camped cell is not part of a chained network deployment, the UE performs measurements of Synchronization Signal Blocks of otherwise identified neighbor cells. The antenna panel used for this purpose is determined in a manner similar to what is done in steps 303 and 304, but these steps are not shown in FIG. 3 for clarity reasons.

As described in relation with FIG. 3, the UE acquires deployment knowledge and uses this knowledge to do power efficient neighbor cell measurements in the panel, beam, and cell domains. Power saving can be achieved by measuring only through a single antenna panel pointing to the estimated moving direction of the UE, and by measuring a limited set of relevant neighbor cells along the road. The set will comprise only the next neighbor cell in the chain for most of the UE locations along the road.

One or more embodiments could be further improved by applying machine learning techniques.

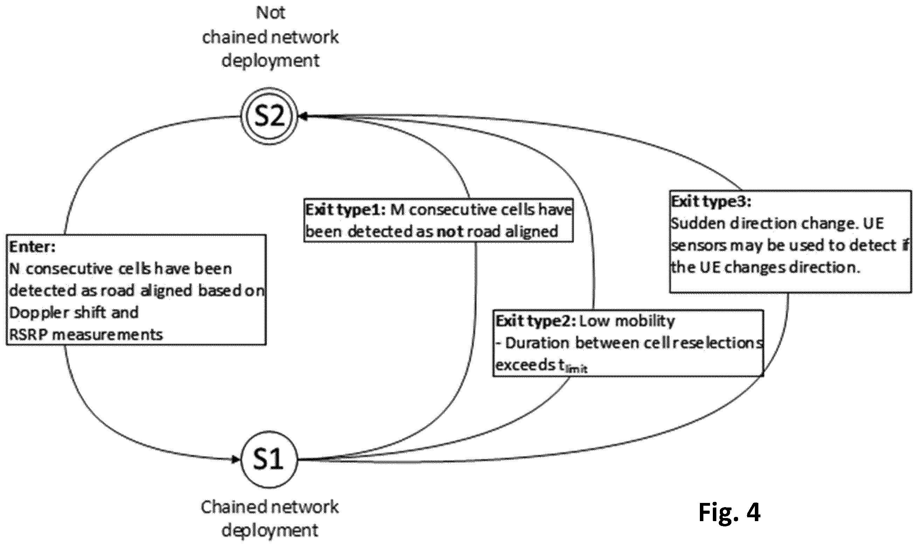

Exemplary embodiments of methods for determining whether a camping cell is part of a chained network deployment or not will now be described in relation with FIG. 4. Such methods may be used to implement step 302 of FIG. 3.

According to a first exemplary method for determining whether a camping cell is part of a chained network deployment or not, the UE receives explicit information from the network as to whether the camping cell is part of such a chained network deployment. This explicit information may be a piece of data, for example a single-bit flag, included in information relating to neighbor cells sent to the UE by the camping cell's base station. According to an exemplary embodiment, the explicit information is included in a System Information Block (SIB) message, and in particular in a SIB containing cell reselection related information such as SIB2. SIB2 per se is described e.g. in section 6.3.1 of 3GPP 38.331.

According to a second exemplary method for determining whether a camping cell is part of a chained network deployment or not, the UE autonomously determines, or self-detects, whether the camping cell is part of a chained network deployment or not. According to an exemplary embodiment of the second exemplary method, the UE takes into account information pertaining to cells it camped on previously to determine whether the current camping cell is part of a chained network deployment or not.

According to a variant of the second exemplary method, self-detection may be continuously carried out by the UE. According to another variant of the second exemplary method, the self-detection is triggered by one or more events. For example, such an event may comprise monitoring an indicator of the mobility of the UE and triggering may occur if this indicator indicates a high mobility (e.g. compared to a threshold). Such an indicator may, for example, comprise the number of cell reselections during a given time period.

FIG. 4 is a state transition diagram illustrating exemplary conditions that the UE may check to determine whether the UE is in a 'chained network deployment' state (S1) or in a 'not chained network deployment' state (S2). One or more enter conditions and one or more exit conditions may exist for each state. According to the present exemplary embodiment, state S1 has one enter condition and three exit conditions.

According to an exemplary embodiment, state S1 is entered if N consecutive past camping cells were categorized as road aligned. The notion of road alignment, will be described in more detail later on. N is a parameter which may be internal to the UE. N is an integer greater than zero which may for example equal to three, but other values can be considered depending on circumstances. According to a variant embodiment, N may be imposed by the network. According to a variant embodiment, the value of N may be adapted by the UE, e.g. as a function of a history of road alignment, or lack thereof, of past camping cells. For example, N may be set to a value larger than 2 or 3 (e.g. 5) if the UE has no previous knowledge or history of cell road alignment. N can be decreased, e.g. to 2 or 3, once such a history is available.

The base station of the camping cell broadcasts information about potential intra frequency neighbor cells and inter frequency neighbor cells in System Information Blocks. SIBs and their content per se are described e.g. in 3GPP 38.331, section 6.3.1. Based on this information, the UE knows the physical cell identifiers (PCIs) and the carrier frequency at least for inter-frequency neighbor cells. The UE keeps a history of cells it camped on in the past and of the result of the road alignment determination it carried out for these cells. If N cells that the UE consecutively camped on were considered road aligned, the UE may assume that one or more neighbor cells in the neighbor cell list it received are also road aligned.

Base stations in a network chain deployment may be expected to operate in a same frequency layer, i.e. intra-frequency deployment. Even if more than one frequency layer is used in the deployment, it can be expected that a same frequency layer be assigned to have the highest priority, and thus to be preferred for the camping.

According to an exemplary embodiment, a first exit condition ('Exit type 1') from state S1 is that a number M of consecutive camping cells are not road aligned. M is an integer greater than zero. M is a parameter internal to the UE. In the present exemplary embodiment, M is taken equal to one, although other values can be chosen depending on the specificities of a particular context. According to a variant embodiment, the value of M may be imposed by the network. According to a variant embodiment, the value of M may be adapted by the UE.

According to an exemplary embodiment, a second exit condition ('Exit type 2') from state S1 is a low mobility condition of the UE relative to the camping cell. Low mobility may for example be determined by comparing the time duration between two consecutive cell reselections to a threshold ('tlimit'). The threshold may for example be function of expected duration calculated based on the moving speed and expected (or known) distance between the transmission/reception points of two cells. It may also be function of past time intervals between cell reselections. The UE may keep such data as part of the history previously mentioned. The Person Skilled in the Art may readily devise other criteria to determine low or no mobility.

According to an exemplary embodiment, a third exit condition ('Exit type 3') from state S1 consists in determining a change of direction, e.g. when making a turn to enter another road. According to an exemplary embodiment, the UE may detect such a change of direction using one or more sensors. Such sensors may comprise e.g. one or more gyroscopes and/or one more compasses and/or one or more accelerometers. Such sensors may possibly be associated with at least one map stored by the UE. According to an exemplary embodiment, a speed of a change of direction is determined, e.g. an angular speed such as in degrees per second ('degrees_per_sec'), and this speed may be compared to a threshold to determine whether the condition is met or not. According to an exemplary embodiment, the beam width of the antenna panel of the UE used in the communication between the UE and the camping cell may be taken into account since a wide beam is assumed to be more tolerant to directional changes than a narrow beam. E.g. the following equation may be used to determine whether a directional change meets the exit type 3 condition:

$$\frac{degrees\_per\_sec}{beam\_width} > threshold \quad (Eq.\,1)$$

According to an exemplary embodiment, any subset of the three exit conditions described above can be implemented, as opposed to all three of them.

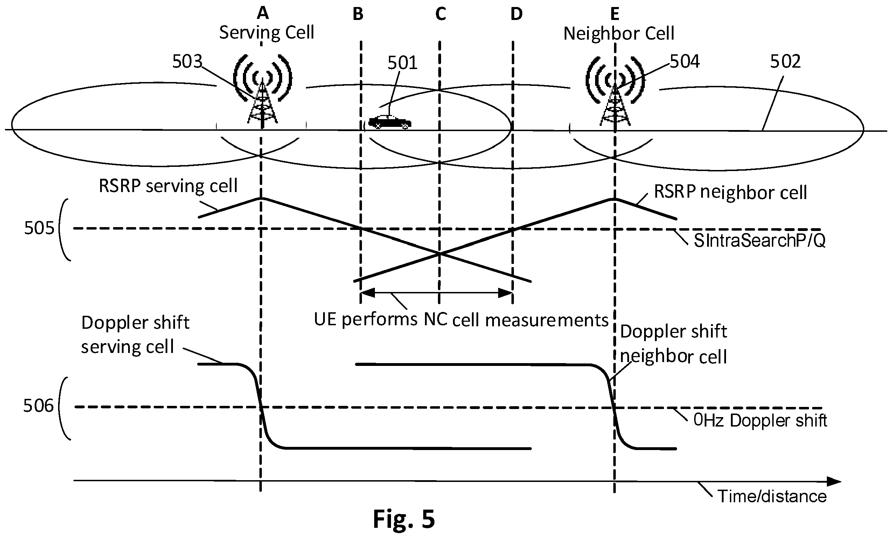

One or more exemplary methods for determining whether a cell is road aligned or not will now be described, in reference to FIGs 5 to 11. A road aligned cell is a cell that is deployed along the path of the UE and covering that path at least partially. The term 'road' will be used in what follows, because application to roads is expected to be a frequent use case in the future, but the term should not be construed as limiting within the present application and applies to any path along which a UE may move, as previously described. 'Along the path' may correspond to any position of a transmission/reception point that allows a cell to cover with its radio coverage part of the path, for example on the side of the path, between lanes in opposite directions, on a bridge spanning the path, integrated within a street lamp hanging over the path...

According to an exemplary embodiment, one or more metrics are used in making the determination. These metrics may include the Doppler Shift and power or quality measurements, as described in more detail below. As an example of power measurement, an RSRP measurement may be used. The advantage of using Doppler shift and/or a power measurements such as RSRP is that both are already evaluated by the UE for other purposes and are not performed specifically for the purpose of the embodiments described herein. By reusing these metrics, UE power is preserved. Other metrics to replace or complement those described herein may readily be devised by the Person Skilled in the Art.

With regard to using the Doppler shift as a first metric, the Doppler frequency offset observed with regard to the serving cell during consecutive discontinuous reception (DRX) cycles is used. In particular, for determining road alignment, use is made of the change in the Doppler frequency offset that occurs when passing close to the transmission/reception point of the cell. In addition, the evolution of the offset is monitored before and after passing the transmission/reception point. Indeed, while in an ideal case in which the path of the UE traverses the position of the transmission/reception point and the absolute value of the offset remains constant, this is not so if the UE passes with a spatial offset from the transmission/reception point, in which case the absolute value of the Doppler offset will be lower than in the ideal case and change as a function of the UE's distance to the transmission/reception point. According to one or more embodiments, the Doppler shift may be determined by UE by measuring the CFO (carrier frequency offset) which is the observed frequency error on the received signal from the serving base station. This is done to allow the UE to adjust its own carrier frequency such that the UE can minimize the frequency error of the received signal. This is ensuring that the UE can start transmitting to base station with a low frequency error when it wants to set up a connection. In idle mode, the UE normally measures the CFO periodically per DRX cycle.

The UE can detect the frequency error by receiving the PSS. The observed frequency error is arising from:

- A discrepancy of reference clock between the base station and the UE.
- The Doppler shift.

To isolate the Doppler shift, the discrepancy of reference clock between the base station and the UE must be removed or minimized. This discrepancy can found and corrected for in multiple ways, among which:

- measuring the received clock from a GNSS satellite occasionally (This would be a common clock reference, since base stations are required to use GNSS as clock reference);
- as an alternative solution not requiring GNSS, measuring the frequency errors as the UE passes the base station (the point with the steepest negative slope). If the steepest negative slope is not centered around 0Hz then the discrepancy equals the offset of the Doppler shift at the steepest slope.

With regard to exemplary embodiments using received power as a second metric, the absolute level of SS-RSRP measurements by the UE of the serving cell is used, in addition to the slope of the SS-RSRP measurements seen over consecutive measurement periods (DRX cycles).

The UE carries out measurements e.g. for each DRX cycle and stores the results for later processing.

FIG. 5 is a schematic diagram illustrating a UE (carried by car 501) on a road 502 near a camping cell of a base station 503 and a neighbor cell of a base station 504. The car moves from the left to the right of FIG. 5. Positions A, B, C, D and E are specific positions of the car on the road corresponding to certain events. Position A is the position of the car closest to the transmission/reception point corresponding to the cell of base station 503, whereas position E is the position of the car closest to the transmission/reception point corresponding to the cell of base station 504. A graph 505 and a graph 506 aligned with the road 502 schematically show the evolution of the RSRP measurements and of the Doppler shift as the UE moves. Specifically, the Doppler shift changes sign when the UE passes the transmission/reception points. The RSRP presents a high slope and a sharp peak. The positions between positions B and D correspond to the positions of the car when the RSRP measurements are below the 'SintraSearchP/Q' threshold and define the interval during which the UE performs a search for neighbor cells. This is also the interval during which the approximation that the UE moves on a linear segment directly away from the transmission/reception point of the serving cell towards the transmission/reception point of the neighbor cell is the most valid. Therefore, according to the present exemplary embodiment, neighbor cell measurements are performed using the antenna panel of the UE pointing into a direction closest to the direction into which the UE is moving.

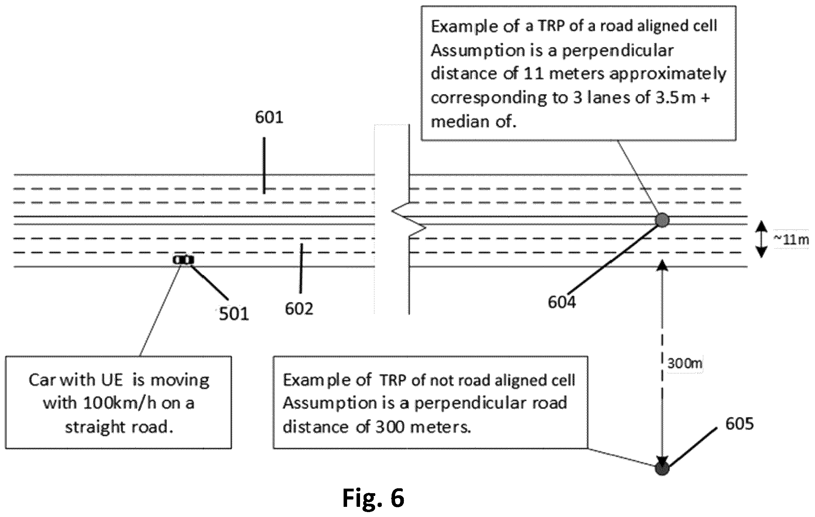

Exemplary embodiments of methods for determining road alignment will now be described in relation with FIG. 6, which represents a schematic diagram of a road comprising two sets 601 and 602 of three lanes into opposite directions. A car 501 with a UE travels on the lower set of lanes. A first transmission/reception point 604 is placed between the two sets of lanes, and a second transmission/reception point 605 is placed at several hundred meters (such as e.g. 300 meters) from the set of lanes 602. Within the frame of the present example, since the width of a lane is approx. 3.5 meters, cars will always be at a maximum distance of $3*3.5$ meters, i.e. approximately 11 meters of transmission/reception point 604 when passing at the level of that transmission/reception point.

According to a first exemplary use case ('use case 1'), the camping cell of car 603 is the cell associated with transmission/reception point 604, and according to a second exemplary use case ('use case 2'), the camping cell of car 603 is the cell associated with transmission/reception point 605. In the first use case, the transmission/reception point 604 is considered as being road aligned, whereas in the second use case, the transmission/reception point 605 is considered as not being road aligned.

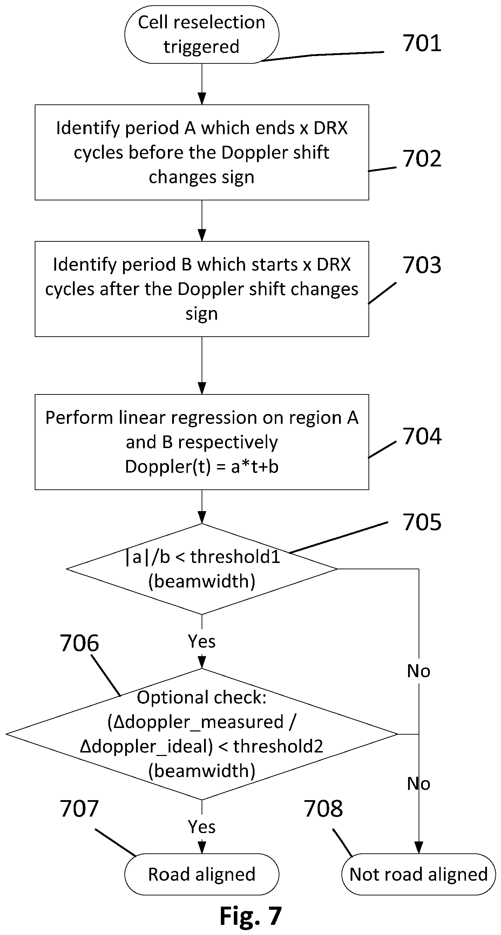

FIG. 7 is a flowchart of an exemplary embodiment of a method that can be used by the UE to determine road alignment of a cell based on the first metric, i.e. the Doppler shift. According to the flowchart of FIG. 7, the evaluation of whether a previously camped cell is road aligned is carried out after the UE triggered reselection of the subsequent camping cell. This trigger condition is indicated as step 701 in FIG. 7. According to a variant embodiment, the method can also be performed at a later time.

According to a variant embodiment, the triggering of this evaluation may be performed on other criteria, e.g. based on the observation of a switch in sign of the Doppler shift or of a path loss discontinuity for power or quality based measurements indicating that the UE has passed the actual transmission/reception point of a camping cell. Additionally, a threshold may be added to avoid triggering the evaluation if the Doppler shift is toggling too frequently, e.g. in case of low speed or in case of noise on the Doppler shift measurements.

In steps 702 and 703, the UE processes the Doppler shift measurements for the transmission/reception points of past camping cells to determine a period A of positive Doppler shifts and a period B of negative Doppler shifts. The slope 'a' during these periods is determined. Such a determination can be made for example applying linear regression in a step 704. A determination is then made as to the steepness of the slope, e.g. by comparing the absolute value of 'a' to a first threshold value at a step 705. If the comparison shows that the absolute value of 'a' is below the threshold, i.e. that the slope is within an acceptance range, the UE determines that the past serving base station is road aligned (step 707).

In case the test at step 705 was positive, the UE may also optionally proceed with an additional check at a step 706. Step 706 requires that the UE know its velocity. Based on this velocity, the UE determines a reference value of the Doppler shift difference before and after the sign change and compares it to the actual Doppler shift difference based on the measurements. If the comparison is within a certain range defined by a second threshold, then the UE will determine that the past serving cell is road aligned.

In case both steps 705 and 706 are carried out, the UE determines road alignment for the past serving cell only if both checks are positive, else the past serving cell is not considered road aligned (step 708).

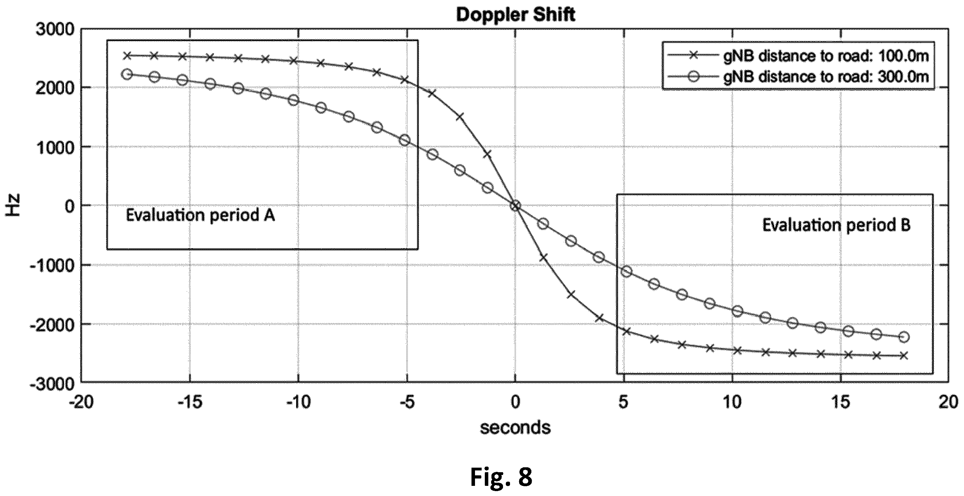

An exemplary embodiment for the determination of the linear regression of the Doppler shift measurements will now be described in relation with FIG. 8. This embodiment may be used to implement step 704 of FIG. 7. FIG. 8 is a graph showing Doppler shift measurements in Hz, The two graphs respectively represent data points for a distance of 100m between the transmission/reception point and the road and for a distance of 300m, as a function of time t, where t=0 corresponds to the moment where the UE passes closest to the transmission/reception point of the serving base station. Each data point is separated by a DRX cycle, equal to 1.28 seconds. Evaluation periods A and B are also illustrated. Linear regression is performed for measurement values in these two periods and results, for each period, in an expression of the type:

$$Doppler(t) = a \cdot t + b$$

Based on the linear regression, the UE can evaluate if the slope 'a' of the Doppler shift curve is within the acceptance range. The evaluation periods can be correlated with the periods where RRM measurement rules are evaluated (as set out in 3GPP TS 38.304 section 5.2.4.2 and TS 38.133, releases 15 and 16), because these are the periods where neighbor cell measurements will be performed.

A non-limiting example of measurement selection for periods A and B will now be provided based on the following assumptions:

- UE moving at 100km/h (27.8m/s).
- UE has four panels oriented towards the front, back and sideways at a 90° angle, each supporting beams with a 3dB beam width of 90°.
- UE is in idle on FR2 at 28GHz.
- Allowed road offset of a transmission/reception point: 100 meters (this value also includes offset due to a potential curve of the road).

The UE can choose to ignore the samples closest to the crossing point since these Doppler shift measurements will deviate significantly from the ideal Doppler shift (the Doppler shift experienced for a transmission/reception point positioned directly in the moving direction of the UE). As an example, one could choose to ignore three measurements on both sides of the zero crossing. As will be shown in the following, this ensures that the level of the Doppler shift measurements is more than 80% of the ideal Doppler shift level for the case where the base station is at maximum 100m from the road.

Within the frame of the present example, the used measurements (i.e. those which are not ignored) are performed at least (4 * 1,28s) * 27,8m/s = 142m from the crossing point of the transmission/reception point. If the transmission/reception point offset to the road is 100m then the maximum relative angle between the moving direction and the direction from UE towards the transmission/reception point is:

$$\alpha = atan(100/142) = 35.1°$$

Since the Doppler shift is proportional to $cos(\alpha)$ and $cos(\alpha) = 0.818$ for $\alpha = 35.1$, it means that the Doppler shift measurements outside the ignored region will be at least [Dopple] _ideal* 0.818 (81,8% level).

Based on the linear regression, the UE can evaluate if the slope 'a' of the Doppler shift curve is within an acceptance range. Since there is a correlation between the measured Doppler shift and the angle of arrival of the received signal, the acceptance range can be chosen based on the supported beam width of the antenna panels inside the UE. The larger the beam width, the broader the range that can be accepted:

$$\frac{|a|}{b} < threshold1(beam_{width}) \quad (Eq.2)$$

In equation 2, the division of |a| by b renders the threshold independent of speed and frequency. Table 1 shows values for a, b the ideal Doppler shift and the ratio |a|/b for respective distances of 100m and 300m between the road and the transmission/reception point within the frame of the numerical example above. In the frame of this example, a threshold for equation 2 could be 0.014.

Table 1

| Offset of transmission/reception point | $a$ | $b$ | $Doppler_{ideal}$ | $\dfrac{|a|}{b}$ |
|---|---|---|---|---|
| 100m | -28.4 | 2097 | 2.59kHz | 0.014 |
| 300m | -83.9 | 835 | 2.59kHz | 0.101 |

According to one or more exemplary embodiments, a slope is determined for period A and another one for period B. According to one or more exemplary embodiments, both slopes have to be below the threshold to pass the test of step 705. According to a variant embodiment, a slope is determined only for one of the period. According to another variant embodiment, slopes are determined for both periods but it suffices that one of the slopes be below the threshold for the test of step 705 to be considered passed.

An exemplary embodiment for the determination of a reference difference value of the Doppler shift will now be described. This reference difference can be used in the frame of the check carried out in step 706 of FIG. 7. As indicated earlier, the absolute difference between the evaluation period A and B can be compared with a reference difference based on UE velocity. According to the present exemplary embodiment, this reference value corresponds to the case in which the UE is moving on the linear segment between the transmission/reception point of the serving cell and the transmission/reception point of the neighbor cell. This corresponds to the ideal case where the distance between the transmission/reception points to the UE path is zero. The difference is calculated as:

$$\Delta Doppler_{ideal} = 2 \cdot f \cdot \frac{v}{c}$$

Where, within the example of a 5G network and a FR2 frequency range, f is the carrier frequency (28GHz), v is the velocity of the UE (100km/h) and c is the speed of radio wave propagation (3.0e8 m/s). For the example use case 1 mentioned above in relation with FIG. 6, the ideal Doppler shift change can be calculated to be:

$$\Delta Doppler_{ideal} = 2 \cdot 28e9\text{Hz} \cdot \frac{\frac{100\,\text{m}}{3.6\,\text{s}}}{3e8\frac{\text{m}}{\text{s}}} = 5.2\text{kHz}$$

The UE can verify that [ΔDoppler]_measured is within a certain range from ΔDoppler_ideal. ΔDoppler_measured can be found as:

$$\Delta Doppler_{measured} = \overline{Doppler_{region\,A}} - \overline{Doppler_{region\,B}}$$

where $\overline{Doppler_{regionA}}$ and $\overline{Doppler_{regionB}}$ are the mean value of the Doppler shift measurements in periods A and B respectively. Again, the allowed range will depend on the beam width of the UE antenna panels. This can be expressed as:

$$\frac{\Delta Doppler_{measured}}{\Delta Doppler_{ideal}} < threshold2(beamwidth) \quad (Eq.3)$$

In equation 3, the division by ΔDoppler_ideal renders the threshold independent of the frequency used.

Within the frame of the non-limiting numerical example previously mentioned, table 2 provides an example of thresholds.

Table 2

| Offset of transmission/reception point | $\Delta Doppler_{measured}$ | $\Delta Doppler_{ideal}$ | $\dfrac{\Delta Doppler_{measured}}{\Delta Doppler_{ideal}}$ |
|---|---|---|---|
| 100m | 4.8kHz | 5.2kHz | 0.93 |
| 300m | 3.6kHz | 5.2kHz | 0.70 |

According to the numerical example a threshold for equation 3 could be 0,93. The closer the threshold is to 1.00 the more restrictive the evaluation is.

According to a variant embodiment, the evaluation of a slope at the x-axis crossing (x=0) is above a threshold.

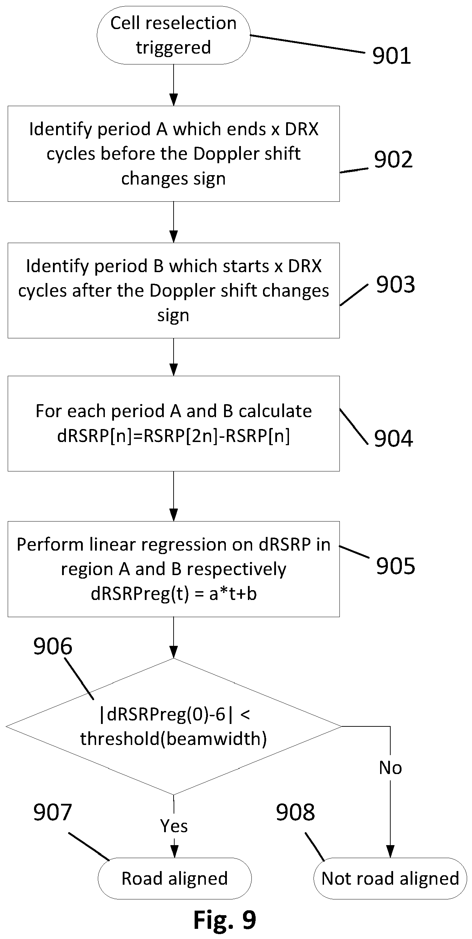

FIG. 9 is a flowchart of an exemplary embodiment comprising a method that can be used by the UE to determine road alignment of a transmission/reception point based on the second metric, i.e. measurement of power. According to this exemplary embodiment, RSRP measurements are used. According to the flowchart of FIG. 9, the evaluation of whether the transmission/reception point of a previously camped cell is road aligned is carried out after the UE triggered reselection of the subsequent camping cell. This trigger condition is indicated as step 901 in FIG. 9. According to a variant embodiment, the method can also be performed at a later time.

When a cell reselection is performed, the UE processes, at a step 902 and 903, the collected RSRP measurements and Doppler shift measurements from the last serving cell to construct at least a period A, which includes increasing RSRP values, and a period B, which includes decreasing RSRP values. Let n denote an integer representing the number of DRX cycles or distance from the passing point - with constant speed the distance will be proportional to n. Negative n values correspond to approaching the passing point and positive n values correspond to leaving the passing point. Let dRSRP[n] = RSRP[2n] - RSRP[n] in the at least one period A and at least one period B. This calculation is performed at step 904. By performing linear regression on the dRSRP values (step 905) the following linear approximation can be found:

$$dRSRP_{reg}(t) = a \cdot t + b$$

The UE will assume the cell to be road aligned (reaching state 907) if:

$$\left| dRSRP_{reg}(0) - 6 \right| < threshold(beamwidth)$$

This condition is tested at a step 906. Otherwise the UE will assume the cell to be not road aligned (reaching state 908).

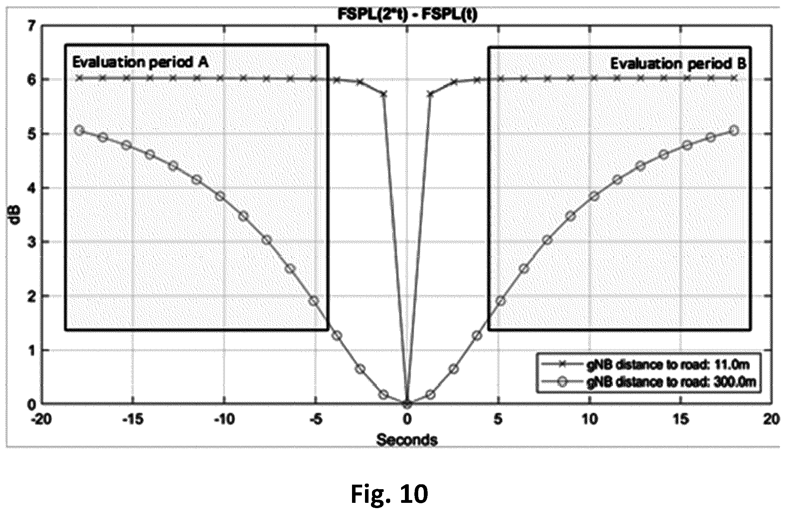

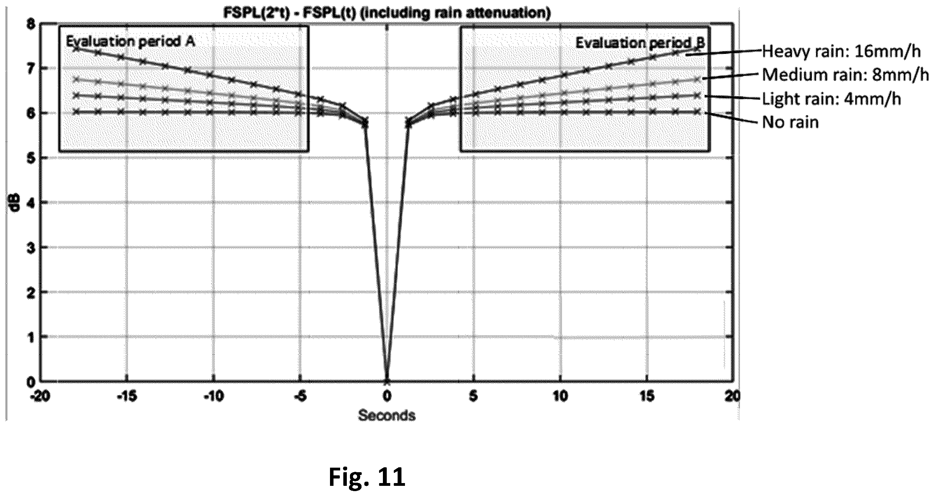

An exemplary embodiment for the determination of differential RSRP values dRSRP[n] values by the UE will now be described, in conjunction with FIG. 10 and FIG. 11. This exemplary embodiment may be used to implement step 904 of FIG. 9.

The exemplary embodiment of FIG. 9 uses the deterministic change in RSRP when the distance between the UE and the transmission/reception point varies by a known amount, e.g. doubles, assuming line of sight between the UE and the transmission/reception point. Assuming also that the antenna gain and impact of the vehicle on the measurements is constant, the change in RSRP is caused only by propagation loss. To evaluate the change in propagation loss when the distance to the transmission/reception point doubles, the free space path loss (FSPL) can be used. FSPL is given by:

$$FSPL(d) = 20 \cdot \log_{10} \frac{4\pi d f}{c} \quad (Eq.\,4)$$

d represents the distance in meters and f represents the frequency in Hz.

In the case in which the cell is perfectly road aligned and the UE moves with constant speed and has line of sight, the following can be applied for a UE at a distance d from the passing point of the transmission/reception point:

$$FSPL(2d) - FSPL(d) = 20 \cdot \log_{10} 2 = 6dB \quad (Eq. 4')$$

Thus in the ideal case, the path loss ideally increases by 6dB every time the distance to the transmission/reception point is doubled. However, if the cell is not road aligned, then the distance to the transmission/reception point will not double as the time t doubles, where t is the time distance to the passing point of the transmission/reception point. It will change less and likewise the change in FSPL.

FIG. 10 is a diagram showing the evolution of the FSPL difference FSPL(2t)-FSPL(t) based on equation 4' for the two use cases mentioned earlier. Each data point is separated by a DRX cycle. It can be seen that for the first use case (transmission/reception point at 11 meters from the road, i.e. close to the ideal conditions of zero distance), the FSPL difference is nearly constant at 6dB in periods A and B. For the second use case (transmission/reception point at 300 meters) the FPSL difference shows a very different progression: it is lower than 6 dB and evolves significantly over time, i.e. is not constant or nearly constant during periods A and B. This difference can hence be used to test for road alignment.

According to a variant embodiment, weather conditions are taken into account when determining free space path loss. Weather conditions may cause an additional path loss. This additional path loss may be modeled linearly as a function of the distance to the transmission/reception point. Therefore the slope of the FSPL difference FSPL(2t)-FSPL(t) may depend on the weather conditions. The impact of weather conditions may be simulated. FIG. 11 is a diagram similar to FIG. 10, but taking into account weather condition impact simulation. The simulation uses the rain model provided by MathWorks. FIG. 11 illustrates the first use case with different rain intensities. Again, each data point is separated by a DRX cycle.

It can be observed that as indicated above, the impact of rain diminishes with reduced distance to the transmission/reception point, and that linear extrapolation of the line segments in each one of the periods A and B would cross at approx. 6dB for t=0. This property can be used as a decision criterion with regard to road alignment.

An exemplary embodiment for the determination of a linear regression RSRPreg(t) of differential RSRP values by the UE will now be described. This exemplary embodiment may be used to implement step 905 of FIG. 9.

According to the present exemplary embodiment, linear regression is performed on data points found by applying dRSRP[n] = RSRP[2n] - RSRP[n], where 'n' is taken as 0 at the passing point of the transmission/reception point, which can be detected by evaluation the corresponding Doppler shift measurements and determining when the Doppler shift changes sign. The mapping between n and time t is t = n*DRX_cycle_period. The resulting regression line can be expressed as explained earlier as:

$$dRSRP_{reg}(t) = a \cdot t + b$$

According to the present exemplary embodiment, road alignment is determined by testing, at t=0, whether $dRSRP_{reg}(t)$ is equal to 6dB within a certain threshold:

$$\left| dRSRP_{reg}(0) - 6\,dB \right| < threshold(beamwidth) \quad (Eq. 5)$$

Table 3

| Offset of transmission / reception point | $dRSRP_{reg}(0)$ | $\lvert dRSRP_{reg}(0) - 6\,dB\rvert$ |
|---|---|---|
| 100m | 4.7dB | 1.3dB |
| 300m | 1.1dB | 4.9dB |

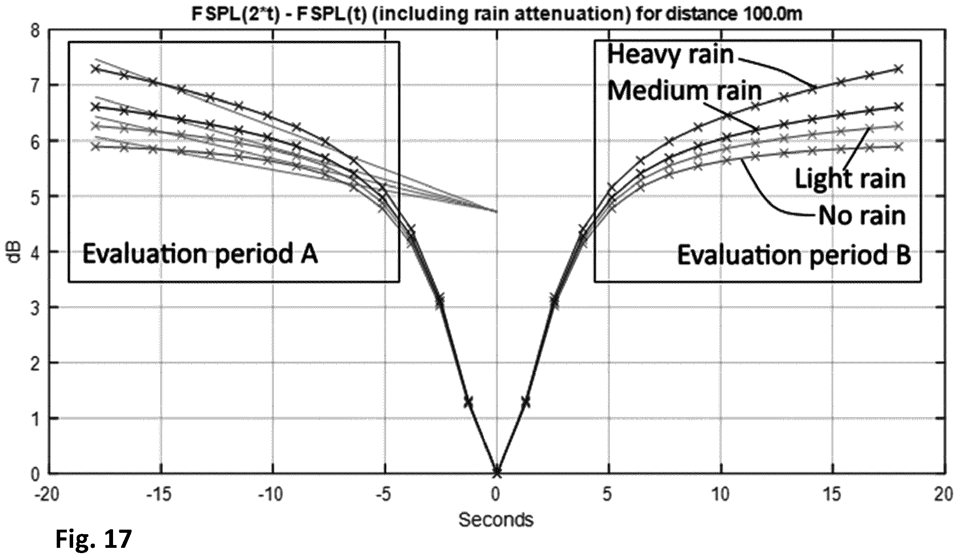

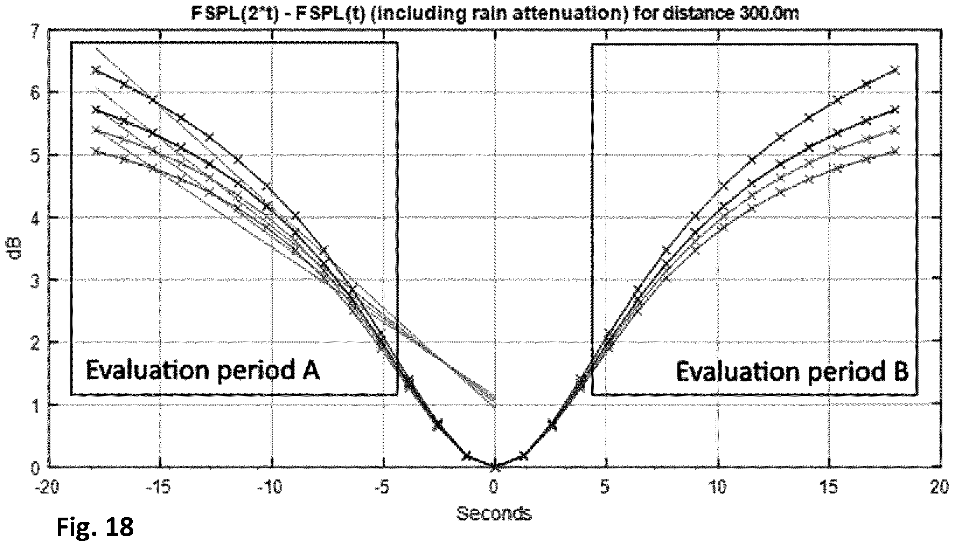

Within the frame of the example of Table 3, a threshold for the equation 5 could be 1.3dB. The closer the threshold is to 0.00dB the more restrictive the evaluation is. FIG. 17 and FIG. 18 are graphs respectively illustrating the cases of a transmission/reception point with an offset of 100 meters and with an offset of 300 meters from the road. The lines crossing close to x=0 are the linear approximations of the slopes when ignoring the three measurements closest to x=0, as in the case of the Doppler shift embodiment described above.

The expression of equation 5 may be applied to values on both sides of the transmission/reception point, i.e. when approaching and when moving away from the transmission/reception point. Based on this test, the UE determines (e.g. in step 906 of FIG. 9) whether or not a serving transmission/reception point is road aligned or not and stores this information for future use, in particular in the frame of detecting chained network deployment.

One or more exemplary embodiments of methods for determining information indicative of the direction into which the UE is moving and information indicative of its orientation will now be described. Such methods may be used to implement step 303 of FIG. 3. Taking the example of a UE carried in a car, the direction of motion may be that of the car, while the orientation of the UE may be modified by a user of the UE within the car.

According to a first exemplary embodiment for determining information indicative of the direction into which the UE is moving and information indicative of its orientation, the UE possesses one or more sensors providing such information.

According to a second exemplary embodiment for determining information indicative of the direction into which the UE is moving and information indicative of its orientation, the UE selects the direction and orientation opposite the direction and orientation of the antenna panel and beam previously chosen to communicate with the camping cell. This is done once the UE has passed the transmission/reception point (which it knows e.g. based on monitoring the sign of the Doppler shift). This embodiment may be used in case the UE does not have sensors or in case no sensor data is available for various reasons (power saving mode, difficult conditions for the sensors to function in, etc...).

According to a variant of the second exemplary embodiment for determining information indicative of the direction into which the UE is moving and information indicative of its orientation, the UE further determines whether using this direction and orientation is reliable or not. A first embodiment of a reliability test may involve evaluation of the Doppler shift based on measured values compared to an expected Doppler shift.

- If the UE knows its own speed, the expected Doppler shift can be calculated.
- If the UE does not know its own speed, then it may use earlier measured Doppler shifts from the current camping base station or earlier passed camping base stations as a good reference for the expected Doppler shift.
- If the Doppler shift remains constant over multiple DRX cycles, it indicates that the UE moves directly towards or away from the transmission/reception point of the camping cell depending on the sign of the Doppler shift.

If the measured Doppler shift deviates from the expected Doppler shift, this indicates that the UE has changed direction or speed relative to the transmission/reception point of the camping cell and the direction towards the transmission/reception point of the camping cell may deviate from the moving direction. In this case the UE may not rely on the relative direction.

The UE can alternatively use the change in "symbol timing" to estimate its movement compared to the transmission/reception point, as this is giving the same information and has a similar curve shape as that of the Doppler shift. For instance, when moving away from a transmission/reception point, the UE will receive the SSBs transmitted by the base station associated with that transmission/reception point with a longer propagation delay as compared to delay that a UE observed when it was closer by that transmission/reception point. Therefore, such change in "symbol timing" as the UE moves, can be indicative of the UE moving away or closer to a transmission/reception point. However, for some UEs it may be difficult to maintain such accurate timing synchronization and timing awareness across sleep periods, e.g. depending on the hardware for UE internal synchronization and on the DRX cycle length.

One or more exemplary embodiments of a method for the UE to determine a neighbor cell for measurement purposes will now be described. Such methods may be used to implement step 304 of FIG. 3.

According to an exemplary embodiment of a method for determining a cell to measure, the UE obtains information on candidate intra frequency neighbor cells and inter frequency neighbor cells from the System Information Blocks broadcast by the camping base station. The UE obtains physical cell IDs ('PCI') based on the System Information Block content (e.g. SIB3 and SIB4) and, for inter frequency neighbor cells, also their carrier frequency. In case the UE receives only a list of neighbor cells, without specific order, the UE scan selects the neighbor cell to measure in the order of the list it receives, or use another method to select a next cell to measure. SIB3 and SIB4 are defined in 3GPP TS 38.331, Rel. 16, section 6.3.1.

According to a variant embodiment, in which the network serving the UE is aware of chained network deployment of cells (i.e. it knows which neighbor cells are part of a given chained deployment and in which sequence these neighbor cells appear in the deployment based on their geographical location), the base station transmits to the UE a list of neighbor cells corresponding to all or part of a chained network deployment, which the UE then uses to select a neighbor cell to measure. The base station may also optionally provide the sequential order of the cells in the chained network deployment within the list. For example, supposing a chained list of cells A, B, C, D, E, where C is the cell of the currently camped base station, and the cells A to E are encountered along a road in that order, the base station of cell C can transmit an ordered cell list A, B, D and E. In the frame of the variant embodiment, the UE uses the ordered list to identify the next neighbor cell to measure. This may be done by analyzing the list of past camping cells memorized by the UE and comparing it to the ordered list of neighbor cells. For example, if the UE previously camped on cell A, then on cell B, the next neighbor cell will likely be cell D. The UE can use this information to make a qualified guess on the next neighbor cell which may likely result in a reselection and it will initially prioritize this cell for measurements.

According to a variant embodiment, the serving base station sends an explicit list of neighbor cells belonging to a chained network deployment (whether ordered or not) which includes the serving base station's own cell.

If a cell to be measured cannot be detected, the UE will move on to the next cell in the ordered list within the frame of the variants of the previous paragraphs, or select a cell it has not yet tried among the unordered list of neighbor cells in the frame of the main embodiment. E.g. the UE may determine that it cannot detect a cell if it cannot detect the Primary Synchronization Signal (PSS) or Secondary Synchronization Signal (SSS) of the cell.

According to a variant embodiment, the UE checks for the PSS and SSS signals cycling through all of its antenna panels and associated beams before deciding that a cell cannot be detected.

The UE iterates through the cell lists until a neighbor cell chosen for measurement can be detected. The UE then stops carrying out detection.

One or more exemplary methods for the UE to select an antenna panel will now be described. Such methods may be used to implement step 305 of FIG. 3.

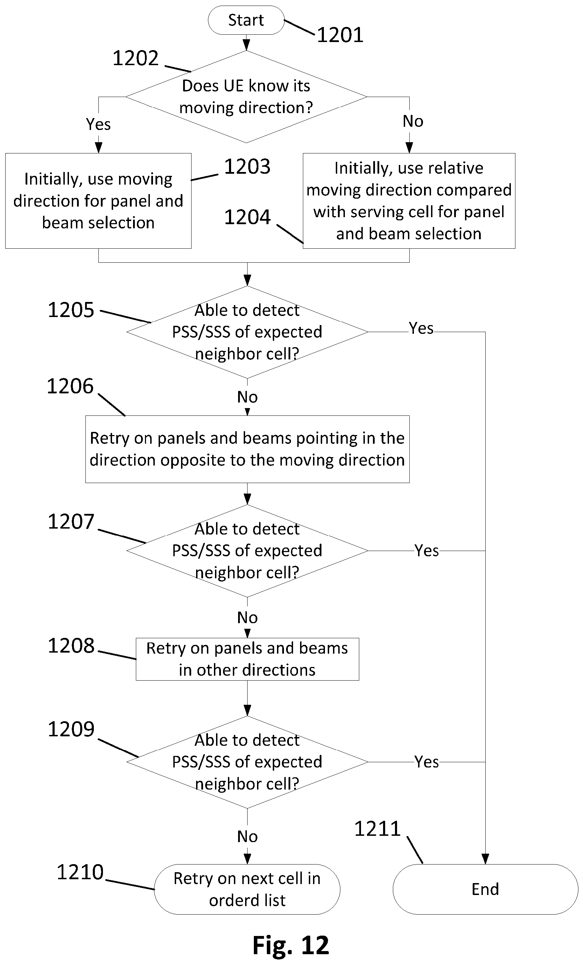

FIG. 12 is a flowchart illustrating an exemplary embodiment of an antenna panel selection method.

After initialization at a step 1201, according to a step 1202, the UE checks whether it knows the direction into which it is moving. If yes (e.g. sensor data is available), it uses this direction for panel and beam selection for measurement (step 1203). If no, then at a step 1204 the UE determines a relative direction of motion compared to the transmission/reception point of the camping cell based on the panel and beam currently in use as explained earlier and uses this relative direction to select a panel and beam for measurement.

At a step 1205, the UE then proceeds with detection of the next neighbor cell to be measured as previously determined. In particular, the UE checks whether it can detect the PSS or the SSS of that cell using the chosen panel, eventually cycling through the beams of that panel if necessary. If the detection is successful, the panel and beam selection process ends at a step 1211. If the detection is not successful, at a step 1206, the UE carries out retries on panels and beams pointing into the opposite direction compared to the initial direction. If the detection is successful, the panel and beam selection process ends at step 1211. If the detection is not successful, panels and beams in other directions are tried at a step 1218. If the detection is successful, the panel and beam selection process ends at step 1211. If the detection is not successful, the UE considers it cannot find the neighbor cell and selects another neighbor cell (step 1210).

In the case of chained cell deployment, the UE shall initially carry out measurements on the panel pointing towards the moving direction. If the panel does not point directly towards the moving direction due to the orientation of the UE, the panel with the beam having highest directional antenna gain in the moving direction is chosen. If the expected neighbor cell is not found in this direction (e.g. the UE is unable to detect PSS and SSS of the cell), the UE shall continue to look for the neighbor cell on the panel in the direction opposite to the moving direction, and if still not found, other panels and beams are chosen before proceeding with the next cell in the list.

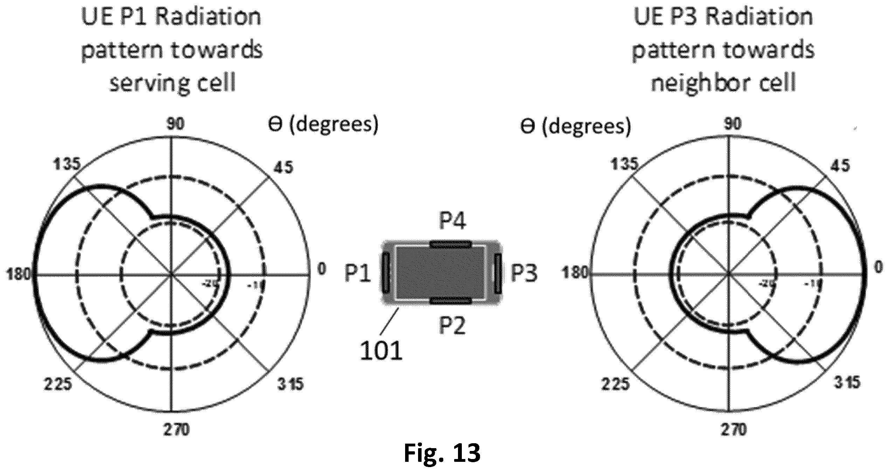

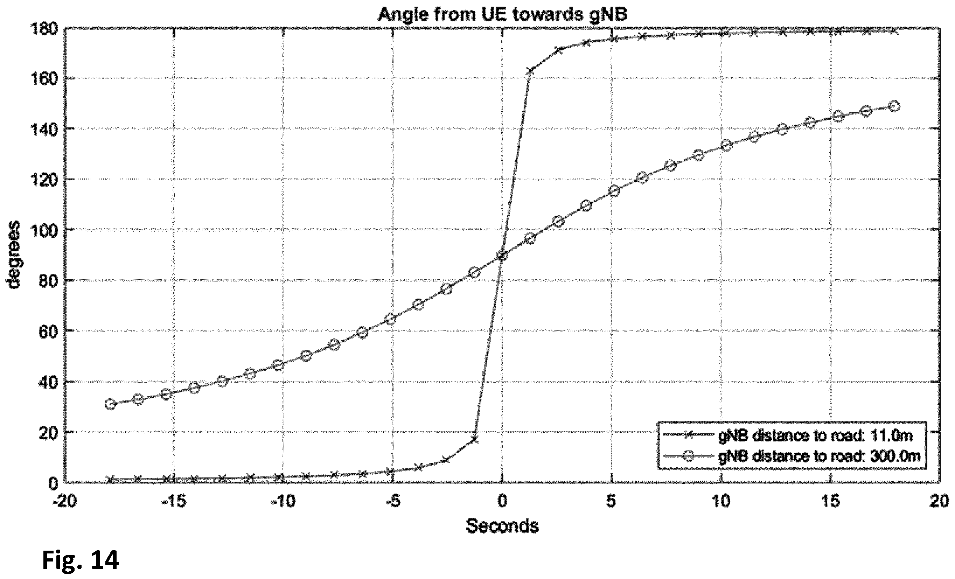

According to one or more embodiments, the UE uses relatively wide beams in the RRC idle/Inactive mode (e.g. based on the transmitted SSB beams that are assumed to be wide). In such a case, the UE will be able to measure a potential neighbor cell even if it is not pointing directly towards it. In that context, FIG. 13 is a schematic diagram of front and back panel radiation patterns of a UE according to one or more exemplary embodiments and shows an exemplary embodiment of a UE comprising four edge panels that each cover 90 degrees. As the UE approaches the transmission/reception point of the neighbor cell, the angle from the UE towards the cell will start to deviate from the moving direction as shown in FIG. 14, which illustrates how this angle changes as the UE moves along the road for the two defined use cases 1 and 2. For use case 1, the angle between the moving direction and the direction from the UE towards the transmission/reception point stays below 20 degrees until the DRX cycle where the UE passes the transmission/reception point. If a UE has four panels as illustrated in FIG. 13, and if each panel offers a beam with 90 degrees beam width then a beam pointing in the moving direction is the best choice at all times until the base station is passed. After the transmission/reception point has been passed, the panel and beam pointing in the opposite direction is the best choice.

In the ideal case with line of sight, illustrated in FIG. 5, the neighbor cell measurements are triggered somewhere around the middle between the transmission/reception point of the camping cell and the transmission/reception point of the target neighbor cell. This corresponds to the situation, where the UE approaches the transmission/reception point of the target neighbor cell from the left in FIG. 14, where the panel and beam pointing in the moving direction is the best choice. However, there may be cases where the UE does not start neighbor cell measurements until after passing the neighbor cell (e.g. if the cells have been placed close to each other) and in this case the UE is already moving on the right side of Figure 13, when it initiates neighbor cell measurements. In this case the UE shall select the panel and beam pointing towards the opposite direction of the moving direction.

For road aligned base stations there is only a very short time interval, during which it is beneficial to choose the panels pointing into a direction perpendicular to the moving direction, so the UE shall prioritize the panels in the following order:

1. Moving direction
2. Direction opposite to moving direction

3. Other directions

According to a variant embodiment, the UE has narrow beams, and in this case, it may have multiple beams covering each of the directions above. The order of priorities may be as described above.

Once the initial panel and beam selection has been performed and the PSS and SSS of a neighbor cell have been detected, the UE can use the measurement results for subsequent measurements. If the Doppler shift follows the curve for use case 1, the UE can keep using forward or backward pointing panels and beams, but if the Doppler shift is closer to use case 2, then the UE can attempt to perform an extrapolation of the Doppler shift measurements and use these to try panels / beams pointing into a direction perpendicular to the moving direction. If the measured Doppler shift becomes low compared to the expected Doppler shift, this suggests that the UE is moving perpendicular to the transmission/reception point of the cell and in this case the beams pointing perpendicular to the moving direction shall be chosen. If the Doppler shift cannot help to conclude which side to measure on, the measurements may need to be done on both sides.

According to one or more embodiments, a base station may control a plurality of cells belonging to a same chained network deployment.

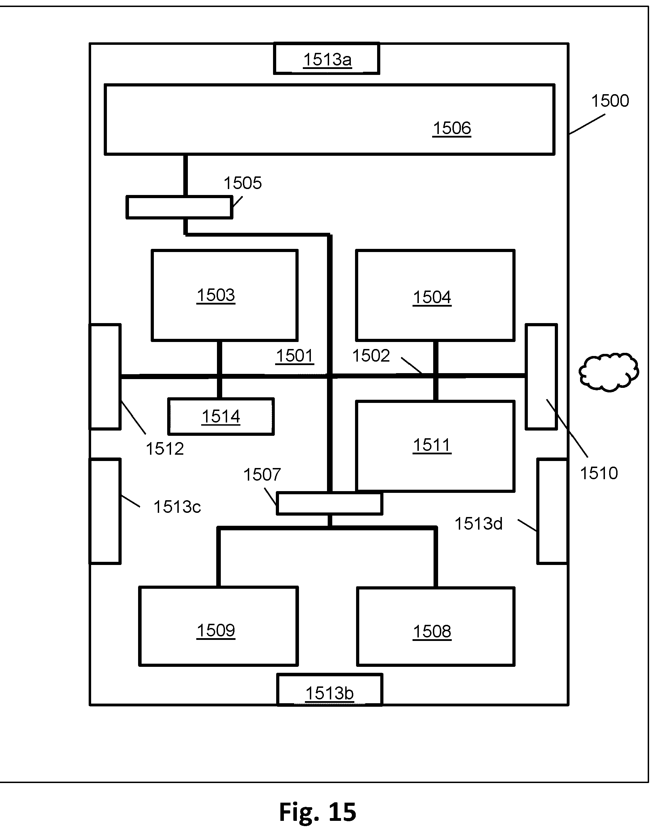

FIG. 15 is a block diagram of a device 1500 that, according to an exemplary embodiment, can be used to implement a user equipment or UE. The device 1500 comprises a printed circuit board 1501 on which a communication bus 1502 connects a processor 1503, a random access memory 1504, a storage medium 1511, an interface 1505 for connecting a display 1506, a series of connectors 1507 for connecting user interface devices or modules such as a mouse or trackpad 1508 and a keyboard 1509, a wireless network module 1510 connected to antenna panels 1513a, 1513b, 1513c and 1513d (connections not shown), and a wired network interface 1512. The UE moreover comprises at least one sensor 5014, which may comprise one or more among an accelerometer, gyroscope, compass and/or other sensors or modules for determining velocity, acceleration and/or orientation. Depending on the functionality required, the UE may implement only part of the above. Certain modules of FIG.15 may be internal or connected externally, in which case they do not necessarily form integral part of the device itself. E.g. display 1506 may be a display that is connected to a device only under specific circumstances, or the device may be controlled through another device with a display, i.e. no specific display 1506 and interface 1505 are required for such a device. The storage medium 1511 may be a ROM and contains code that, when executed by said processor 1504, causes the apparatus and its components to carry out the steps described in the present description.

Antenna panels are placed on left, right, upper and lower internal sides of the UE. There may be more or less panels and they may be placed differently, e.g. to take into account the specifics of the UE, such as the bulk of other components, or the impact of these components on reception and emission quality. Antenna panels do not necessarily need to be spaced evenly.

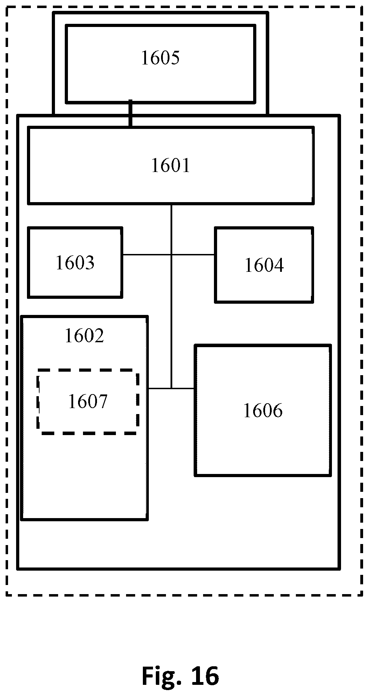

FIG. 16 is a block diagram of a base station (e.g. one of the base stations 103 or 104) according to one or more exemplary embodiments. The base station comprises a processor 1601, a storage medium such as a ROM 1602 holding code 1607, a random access memory 1603, a wireless communication interface 1604 for communicating with user equipment and other devices connecting to a cell generated by the base station, a display 1605 and a communication interface 1606 to cellular network equipment. The code 1607, when executed by the processor 1601, causes the base station to perform one or more of the methods described herein.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

**Examples**

Example UA1. A communication apparatus (101, 1500) comprising a plurality of antenna panels (1513a, 1513b, 1513c, 1513d), at least one processor and at least one memory comprising computer program code, the at least one memory and the computer program code being configured to, with the at least one processor, to cause the communication device to at least perform:

- determining (302) whether a chained network deployment of cells (103-108) exists along a path (102) of said apparatus;

and in case said determination is positive:

- selecting (304) a neighbor cell (104) expected along said path;

- selecting (305) an antenna panel of said plurality of antenna panels as a function of an information representative of a direction of motion of said communication apparatus along said path;
- detecting (306) said expected neighbor cell using said antenna panel.

Example UA2. Communication apparatus according to Example UA1, wherein said memory, computer program code and processor further cause the apparatus to perform, if said detecting is unsuccessful, selecting another antenna panel and reiterating said detecting for said expected neighbour cell.

Example UA3. Communication apparatus according to Example UA2, wherein said memory, computer program code and processor further cause the apparatus to perform selecting of an antenna panel comprises selecting panels according to the following order: the panel having a highest antenna gain in the direction of motion, the panel having a highest gain in the direction opposite to the direction of motion, at least one other panel.

Example UA4. Communication apparatus according to one of the Examples UA1 to Example UA3, wherein said memory, computer program code and processor further cause the apparatus to perform, if said detection is successful,

- carrying out radio resource management measurements and
- performing a reselection of said expected neighbor cell as a function of said radio resource management measurements.

Example UA5. Communication apparatus according to one of the Examples UA1 to UA4, wherein said memory, computer program code and processor further cause the apparatus to perform determining (302) whether a chained network deployment of cells (103-108) exists comprises receiving explicit information from a serving cell that it belongs to a chained network deployment.

Example UA6. Communication apparatus according to one of the Examples UA1 to UA4, wherein said memory, computer program code and processor further cause the apparatus to perform determining (302) whether a chained network deployment of cells (103-108) exists comprises determining past serving cells of said apparatus were aligned with said path.

Example UA7. Communication apparatus according to Example UA6, wherein said memory, computer program code and processor further cause the apparatus to determine that a chained network deployment exists if N consecutive past serving cells are determined as path aligned, wherein N is an integer greater than 1.

Example UA8. Communication apparatus according to Example UA7, wherein said memory, computer program code and processor further cause the apparatus to perform determining path alignment of a given cell as function of a distance of a transmission/reception point of said given cell from the path and of antenna panel beam width.

Example UA9. Communication apparatus according to Example UA8, wherein said memory, computer program code and processor further cause the apparatus to perform evaluation of said distance based on radio resource management measurements carried out by said apparatus before and after passing the transmission/reception point of said given cell on said path.

Example UA10. Communication apparatus according to Example UA9, wherein said memory, computer program code and processor further cause the apparatus to perform evaluation of said distance as function of the evolution of Doppler shifts and/or the evolution of path loss.

Example UA11. Communication apparatus according to one of the Examples UA1 to UA10, wherein said memory, computer program code and processor further cause the apparatus to perform, when selecting an expected neighbor cell, receiving an ordered list of neighbour cells part of said chained network deployment and selecting said expected neighbor cell in said list.

Example UA12. Communication apparatus according to Example UA11, wherein said memory, computer program code and processor further cause the apparatus to perform, when selecting said expected neighbor cell in said list, determining said expected neighbor cell as a function of the order of the cells in the list compared to said direction of motion.

Example UA13. A base station (103) in a cellular network comprising at least one processor and at least one memory comprising computer program code, the at least one memory and the computer program code being configured to, with the at least one processor, to cause the base station to at least perform:

- providing serving cell coverage to a user equipment on a path;
- sending to said user equipment a list of a neighbor cells, wherein said neighbor cells are part of an identified chain of cells providing coverage on said path, said list being ordered as a function of successive locations of said neighbor cells along said path.

Example UA14. Base station according to Example UA13, wherein said memory, computer program code and processor further cause the apparatus to perform transmitting to said user equipment an indication that the serving cell is part of said chain.

Example EA1. A communication apparatus (101, 1500) comprising a plurality of antenna panels (1513a, 1513b, 1513c, 1513d), comprising:

- means for determining (302) whether a chained network deployment of cells (103-108) exists along a path (102) of said apparatus;
- means for selecting (304), in case said determination is positive, a neighbor cell (104) expected along said path;
- means for selecting (305), in case said determination is positive, an antenna panel of said plurality of antenna panels as a function of an information representative of a direction of motion of said communication apparatus along said path;
- means for detecting (306) said expected neighbor cell using said antenna panel.

Example EA 2. Communication apparatus according to Example EA 1, wherein said means for selecting an antenna panel are further configured to, if said detecting is unsuccessful, selecting another antenna panel and reiterating said detecting for said expected neighbour cell.

Example EA 3. Communication apparatus to Example EA 2, wherein said means for selecting an antenna panel are further configured to select panels according to the following order: the panel having a highest antenna gain in the direction of motion, the panel having a highest gain in the direction opposite to the direction of motion, at least one other panel.

Example EA 4. Communication apparatus according to one of Example EA 1 to EA3, further comprising means for, if said detection is successful, carrying out radio resource management measurements and performing a reselection of said expected neighbor cell as a function of said radio resource management measurements.

Example EA 5. Communication apparatus according to one of Example EA 1 to EA 4, wherein said means for determining (302) whether a chained network deployment of cells (103-108) exists are further configured to receive explicit information from a serving cell that it belongs to a chained network deployment.

Example EA 6. Communication apparatus according to one of the Example EA 1 to EA4, wherein said means for determining (302) whether a chained network deployment of cells (103-108) exists are further configured to determine whether past serving cells of said apparatus were aligned with said path.

Example EA 7. Communication apparatus according to Example EA 6, wherein said means for determining (302) whether a chained network deployment of cells (103-108) exists are further configured to determine that a chained network deployment exists if N consecutive past serving cells are determined as path aligned, wherein N is an integer greater than 1.

Example EA 8. Communication apparatus according to Example EA 7, wherein said means for determining (302) whether a chained network deployment of cells (103-108) exists are further configured to determine path alignment of a given cell as function of a distance of a transmission/reception point of said given cell from the path and of antenna panel beam width.

Example EA 9. Communication apparatus according to Example EA 8, wherein said means for determining (302) whether a chained network deployment of cells (103-108) exists are further configured to evaluate said distance based on radio resource management measurements carried out by said apparatus before and after passing the transmission/reception point of said given cell on said path.

Example EA 10. Communication apparatus according to Example EA 9, wherein said means for determining (302) whether a chained network deployment of cells (103-108) exists are further configured to evaluate said distance as a function of the evolution of Doppler shifts and/or the evolution of path loss.

Example EA 11. Communication apparatus according to one of the Examples EA 1 to EA10, wherein said means for selecting an expected neighbor cell are further configured to receive an ordered list of neighbour cells part of said chained network deployment and selecting said expected neighbor cell in said list.

Example EA 12. Communication apparatus according to Example EA 11, wherein said means for selecting an expected neighbor cell are further configured to determine said expected neighbor cell as a function of the order of the cells in the list compared to said direction of motion.

Example EA 13. Base station (103) for use in a cellular network comprising:

- means for providing serving cell coverage to a user equipment on a path;
- means for sending to said user equipment a list of a neighbor cells, wherein said neighbor cells are part of an identified chain of cells providing coverage on said path, said list being ordered as a function of successive locations of said neighbor cells along said path.

Example EA 14. Base station according to Example EA 13, further comprising means for transmitting to said user equipment an indication that the serving cell is part of said chain.

Example P 1. A method at a communication apparatus (101, 1500) comprising a plurality of antenna panels (1513a, 1513b, 1513c, 1513d), said method comprising:

- determining (302) whether a chained network deployment of cells (103-108) exists along a path (102) of said apparatus;

and in case said determination is positive:

- selecting (304) a neighbor cell (104) expected along said path;
- selecting (305) an antenna panel of said plurality of antenna panels as a function of an information representative of a direction of motion of said communication apparatus along said path;
- detecting (306) said expected neighbor cell using said antenna panel.

Example P 2. Method according to Example P 1 comprising, if said detecting is unsuccessful, selecting another antenna panel and reiterating said detecting for said expected neighbour cell.

Example P 3. Method according to Example P 2, wherein said selecting of an antenna panel comprises selecting panels according to the following order: the panel having a highest antenna gain in the direction of motion, the panel having a highest gain in the direction opposite to the direction of motion, at least one other panel.

Example P 4. Method according to one of the Examples P 1 to P 3, wherein if said detection is successful, further comprising

- carrying out radio resource management measurements and
- performing a reselection of said expected neighbor cell as a function of said radio resource management measurements.

Example P 5. Method according to one of the Examples P 1 to P 4, wherein determining (302) whether a chained network deployment of cells (103-108) exists comprises receiving explicit information from a serving cell that it belongs to a chained network deployment.

Example P 6. Method according to one of the Examples P 1 to P 4, wherein determining (302) whether a chained network deployment of cells (103-108) exists comprises determining whether past serving cells of said apparatus were aligned with said path.

Example P 7. Method according to Example P 6, wherein a chained network deployment is determined to exist if N consecutive past serving cells are determined as path aligned, wherein N is an integer greater than 1.

Example P 8. Method according to Example P 7, wherein determining path alignment of a given cell is function of a distance of a transmission/reception point of said given cell from the path and of antenna panel beam width.

Example P 9. Method according to Example P 8, comprising evaluation of said distance based on radio resource management measurements carried out by said apparatus before and after passing the transmission/reception point of said given cell on said path.

Example P 10. Method according to Example P 9, wherein said distance evaluation comprises evaluation of the evolution of Doppler shifts and/or the evolution of path loss.

Example P 11. Method according to one of the Examples P 1 to P 10, wherein selecting an expected neighbor cell comprises receiving an ordered list of neighbour cells part of said chained network deployment and selecting said expected neighbor cell in said list.

Example P 12. Method according to Example P 11, wherein selecting said expected neighbor cell in said list comprises determining said expected neighbor cell as a function of the order of the cells in the list compared to said direction of motion.

Example P 13. A method at a base station (103) in a cellular network comprising:

- providing serving cell coverage to a user equipment on a path;
- sending to said user equipment a list of a neighbor cells, wherein said neighbor cells are part of an identified chain of cells providing coverage on said path, said list being ordered as a function of successive locations of said neighbor cells along said path.

Example P 14. Method according to Example P 13, further comprising transmitting to said user equipment an indication that the serving cell is part of said chain.

Claims

1. A communication apparatus (101, 1500) comprising a plurality of antenna panels (1513a, 1513b, 1513c, 1513d), comprising:

   - means for determining (302) whether a chained network deployment of cells (103-108) exists along a path (102) of said apparatus;
   - means for selecting (304), in case said determination is positive, a neighbor cell (104) expected along said path;
   - means for selecting (305), in case said determination is positive, an antenna panel of said plurality of antenna panels as a function of an information representative of a direction of motion of said communication apparatus along said path;
   - means for detecting (306) said expected neighbor cell using said antenna panel.

2. Communication apparatus according to claim 1, wherein said means for selecting an antenna panel are further configured to, if said detecting is unsuccessful, selecting another antenna panel and reiterating said detecting for said expected neighbour cell.

3. Communication apparatus to claim 2, wherein said means for selecting an antenna panel are further configured to select panels according to the following order: the panel having a highest antenna gain in the direction of motion, the panel having a highest gain in the direction opposite to the direction of motion, at least one other panel.

4. Communication apparatus according to one of the claims 1 to 3, further comprising means for, if said detection is successful, carrying out radio resource management measurements and performing a reselection of said expected neighbor cell as a function of said radio resource management measurements.

5. Communication apparatus according to one of the claims 1 to 4, wherein said means for determining (302) whether a chained network deployment of cells (103-108) exists are further configured to receive explicit information from a serving cell that it belongs to a chained network deployment.

6. Communication apparatus according to one of the claims 1 to 4, wherein said means for determining (302) whether a chained network deployment of cells (103-108) exists are further configured to determine whether past serving cells of said apparatus were aligned with said path.

7. Communication apparatus according to claim 6, wherein said means for determining (302) whether a chained network deployment of cells (103-108) exists are further configured to determine that a chained network deployment exists if the transmission/reception points of N consecutive past serving cells are determined as path aligned, wherein N is an integer greater than 1.

8. Communication apparatus according to claim 7, wherein said means for determining (302) whether a chained network deployment of cells (103-108) exists are further configured to determine path alignment of a given cell as function of a distance of a transmission/reception point of said given cell from the path and of antenna panel beam width.

9. Communication apparatus according to claim 8, wherein said means for determining (302) whether a chained network deployment of cells (103-108) exists are further configured to evaluate said distance based on radio resource management measurements carried out by said apparatus before and after passing the transmission/reception point of said given cell on said path.

10. Communication apparatus according to claim 9, wherein said means for determining (302) whether a chained network deployment of cells (103-108) exists are further configured to evaluate said distance as a function of the evolution of Doppler shifts and/or the evolution of path loss.

11. Communication apparatus according to one of the claims 1 to 10, wherein said means for selecting an expected neighbor cell are further configured to receive an ordered list of neighbour cells part of said chained network deployment and selecting said expected neighbor cell in said list.

12. Communication apparatus according to claim 11, wherein said means for selecting an expected neighbor cell are further configured to determine said expected neighbor cell as a function of the order of the cells in the list compared to said direction of motion.

13. Base station (103) for use in a cellular network comprising:

- means for providing serving cell coverage to a user equipment on a path;
- means for sending to said user equipment a list of a neighbor cells, wherein said neighbor cells are part of an identified chain of cells providing coverage on said path, said list being ordered as a function of successive locations of said neighbor cells along said path.

14. Base station according to claim 13, further comprising means for transmitting to said user equipment an indication that the serving cell is part of said chain.

15. A method at a communication apparatus (101, 1500) comprising a plurality of antenna panels (1513a, 1513b, 1513c, 1513d), said method comprising:

- determining (302) whether a chained network deployment of cells (103-108) exists along a path (102) of said apparatus;

and in case said determination is positive:

- selecting (304) a neighbor cell (104) expected along said path;
- selecting (305) an antenna panel of said plurality of antenna panels as a function of an information representative of a direction of motion of said communication apparatus along said path;
- detecting (306) said expected neighbor cell using said antenna panel.

**Fig. 1**

**Fig. 2**

**Fig. 3**

Fig. 4

Not chained network deployment

S2

S1

Chained network deployment

**Enter:**
N consecutive cells have been detected as road aligned based on Doppler shift and RSRP measurements

**Exit type1:** M consecutive cells have been detected as **not** road aligned

**Exit type2:** Low mobility
- Duration between cell reselections exceeds $t_{limit}$

**Exit type3:**
Sudden direction change. UE sensors may be used to detect if the UE changes direction.

Fig. 5

601

Example of a TRP of a road aligned cell
Assumption is a perpendicular
distance of 11 meters approximately
corresponding to 3 lanes of 3.5m +
median of.

~11m

501

602

604

300m

Car with UE is moving
with 100km/h on a
straight road.

Example of TRP of not road aligned cell
Assumption is a perpendicular road
distance of 300 meters.

605

**Fig. 6**

Cell reselection
triggered

701

Identify period A which ends x DRX
cycles before the Doppler shift
changes sign

702

Identify period B which starts x DRX
cycles after the Doppler shift changes
sign

703

Perform linear regression on region A
and B respectively
Doppler(t) = a*t+b

704

705

|a|/b < threshold1
(beamwidth)

Yes

No

706

Optional check:
(Δdoppler_measured /
Δdoppler_ideal) < threshold2
(beamwidth)

No

707

Yes

708

Road aligned

Not road aligned

**Fig. 7**

Fig. 8

**Fig. 9**

FSPL(2*t) - FSPL(t)

Evaluation period B

Evaluation period A

gNB distance to road: 11.0m
gNB distance to road: 300.0m

Seconds

dB

Fig. 10

**Fig. 11**

EP 3 989 640 A2

Start — 1201

1202 — Does UE know its
moving direction?

Yes

No

1203 — Initially, use moving
direction for panel and
beam selection

Initially, use relative
moving direction compared
with serving cell for panel
and beam selection

1204

1205 — Able to detect
PSS/SSS of expected
neighbor cell? — Yes

No

1206 — Retry on panels and beams pointing in the
direction opposite to the moving direction

1207 — Able to detect
PSS/SSS of expected
neighbor cell? — Yes

No

1208 — Retry on panels and beams
in other directions

1209 — Able to detect
PSS/SSS of expected
neighbor cell? — Yes

No

1211

1210 — Retry on next cell in
orderd list

End

**Fig. 12**

Fig. 13

Fig. 14

EP 3 989 640 A2

**Fig. 15**

Fig. 16

FSPL(2*t) - FSPL(t) (including rain attenuation) for distance 100.0m

Heavy rain
Medium rain
Light rain
No rain

Evaluation period A

Evaluation period B

dB

Seconds

Fig. 17

EP 3 989 640 A2

FSPL(2*t) - FSPL(t) (including rain attenuation) for distance 300.0m

Evaluation period A

Evaluation period B

dB

Seconds

Fig. 18